# EUROPEAN PATENT APPLICATION

(11) **EP 4 507 027 A1**
(43) Date of publication of application: **12.02.2025**
(21) Application number: 22938009.2
(22) Date of filing: 29.04.2022
(51) Int. Cl.: H01M 4/36, H01M 4/38, H01M 4/583, H01M 4/62, H01M 10/0525

(54) **NEGATIVE ELECTRODE MATERIAL AND PREPARATION METHOD THEREFOR, AND LITHIUM ION BATTERY**

(30) Priority: 22.04.2022 CN 202210431181
(71) Applicant: BTR New Material Group Co., Ltd., Shenzhen, Guangdong 518106 (CN); Panasonic Holdings Corporation, Osaka, 571-8501 (JP)
(72) Inventor: LIU, Yi, Shenzhen, Guangdong 518106 (CN); SATO, Yosuke, Moriguchi-shi, Osaka 570--8511 (JP)
(74) Representative: Noréns Patentbyrå AB
(86) International application number: PCT/CN2022/090214
(87) International publication number: WO 2023/201774

(57) **Abstract**

Relating to the field of anode material, an anode material, a preparation method thereof and a lithium ion battery provided. The anode material includes an aggregate, and the aggregate includes a carbon material and a silicon-based material, where the anode material has a porosity W of ≤ 2.5%, and particles with a pore diameter of > 50 nm in the anode material has a quantity proportion P of ≤ 1%. The porosity of the anode material is obtained by the following test method: a pore volume ΔV of the anode material is tested by using a micro-pores size distribution method; and a true density P of the anode material is tested, and the porosity W of the anode material is calculated to be W=ΔV/(ΔV+1/P). The anode material effectively isolates electrolyte, prevents structure of the anode material from collapsing, and improves cycle performance of the battery.

## Description

This application claims the benefit of priority to Chinese Patent Application No. 202210431181.8 entitled "ANODE MATERIAL, PREPARATION METHOD THEREOF, AND LITHIUM ION BATTERY" filed on April 22, 2022, the entire content of which is incorporated herein by reference.

### TECHNICAL FIELD

The present disclosure relates to the technical field of anode material, particularly, to an anode material, a preparation method thereof, and a lithium ion battery.

### BACKGROUND

Lithium ion battery in the prior art is widely used in electric vehicle and consumer electronic due to advantages of large energy density, high output power, long cycle life, and less environmental pollution. In order to increase energy density of battery, the research and development on silicon anode material are advancing day after day. However, side reactions are likely to occur when anode material is in contact with an electrolyte, resulting in structure damaging or even collapse of the anode material, and in poor electrochemical performance, capacity degradation, and reduced cycling stability, so it is difficult to be commercially applied.

Therefore, how to avoid a side reaction between electrolyte and silicon-based material and improve cycling stability of the material is an urgent problem to be solved at present.

### SUMMARY

In view of this, the present disclosure provides an anode material, a preparation method thereof, and a lithium ion battery, which effectively avoid a side reaction caused by contact between an electrolyte and a silicon-based material, and improve cycle performance of the battery. The preparation method reduces preparation cost.

In a first aspect, an embodiment of the present disclosure provides an anode material, including an aggregate, and the aggregate includes a carbon material and a silicon-based material, where the anode material has a porosity W of ≤ 2.5%, and particles with a pore diameter of > 50 nm in the anode material has a quantity proportion P of ≤ 1%.

The porosity of the anode material is obtained by the following test method:
a pore volume ΔV of the anode material is tested by using a micro-pores size distribution method; and a true density P of the anode material is tested, and the porosity W of the anode material is calculated to be W=ΔV/(ΔV+1/P).

The anode material of the present disclosure includes an aggregate, and the aggregate includes an active material and a carbon material. The anode material has a porosity W of ≤ 2.5%, within the range, effectively inhibiting an electrolyte from directly permeating into particles of the anode material through pore structure thereof, and effectively avoiding a side reaction caused by contact between electrolyte and the silicon-based material. Furthermore, by controlling the quantity proportion of particles with a pore diameter of > 50 nm in the anode material, the side reaction caused by electrolyte and the silicon-based material is further avoided, and it is not easy for the electrolyte to permeate into the aggregate. The aggregate has a structure beneficially protecting the silicon-based material particles therein, effectively inhibiting volume expansion of the anode material, reducing expansion rate, and improving cycle performance of the battery.

In an embodiment, the anode material further includes a carbon layer present on at least a part of surface of the aggregate.

In an embodiment, the aggregate includes a carbon material having pore structure, and a silicon-based material filled within the pore structure of the carbon material.

In an embodiment, the aggregate includes a silicon-based material having pore structure, and a carbon material filled within the pore structure of the silicon-based material.

In an embodiment, the silicon-based material has a median particle size of 1 nm to 500 nm.

In an embodiment, the silicon-based material accounts a mass ratio of 10% to 70% in the anode material.

In an embodiment, the carbon material accounts a mass ratio of 10% to 50% in the anode material.

In an embodiment, the carbon material includes at least one of artificial graphite, natural graphite, soft carbon, hard carbon, amorphous carbon, activated carbon, mesocarbon microbead, carbon nanotube, carbon nanofiber, porous carbon, and graphene.

In an embodiment, the carbon material has a median particle size of 1 µm to 50 µm.

In an embodiment, the silicon-based material includes at least one of an elemental silicon, a silicon oxide material, and a silicon alloy.

In an embodiment, the silicon-based material has pore structure.

In an embodiment, particles of the anode material have a breaking strength of ≥ 400 MPa.

In an embodiment, the aggregate further includes a metal oxide.

In an embodiment, the metal oxide is distributed between the carbon material and the silicon-based material.

In an embodiment, the metal oxide is distributed within the pore structure of the carbon material.

In an embodiment, the metal oxide is distributed within the pore structure of the silicon-based material.

In an embodiment, the metal oxide has a chemical formula of MₓO_{y}, where 0.2≤y/x≤3, and M includes at least one of Sn, Ge, Fe, Cu, Ti, Na, Mg, Al, Ca, and Zn.

In an embodiment, the metal oxide is in a form of sheet and/or strip shape.

In an embodiment, the metal oxide has an aspect ratio greater than 2.

In an embodiment, the carbon layer includes amorphous carbon.

In an embodiment, the carbon layer has a thickness of 1 nm to 3000 nm.

In an embodiment, the anode material has a median particle size of 0.5 µm to 30 µm.

In an embodiment, the anode material has a specific surface area of ≤10 m²/g.

In a second aspect, an embodiment of the present disclosure provides a preparation method of an anode material, including the following steps:
grade-mixing a carbon material, a silicon-based material and a solvent to obtain a first precursor, where the first precursor includes the carbon material and the silicon-based material, and the grade-mixing process includes vacuum impregnation;
mixing the first precursor, a first carbon source and a defoaming agent, and performing densification, to obtain a second precursor; and
carbonizing the second precursor to obtain an aggregate.

In the above solution, a carbon material, a silicon-based material and a solvent are grade-mixed and subjected to vacuum impregnation to obtain a first precursor, and the first precursor is mixed with a first carbon source and a defoaming agent and carbonized to obtain an aggregate. In the processes, the grade-mixing enhances mixing uniformity of different substances with each other, reduce interspace generated by accumulation of different substances, improve bulk density, and minimize pores generated by accumulation. by utilizing effect of vacuum, the vacuum impregnation further removes gas on surface of adsorbed product, thus reducing the porosity. Adding the defoaming agent reduces and even eliminates bubbles formed by a volatile matter during the carbonizing, facilitating escape of the volatile matter. During the carbonizing, the first carbon source usually generates a large amount of volatile matter. If the volatile matter does not escape in time, it tends to left internally to form pores after curing. An uniformly dispersed defoaming agent permeates into elastic film of foams and is distributed in the film, which make the elastic film of foams broken through reduction of surface tension, facilitating more smooth escape of the volatile matter. Then, through a densification, part of pores are further reduced, making the material more dense, so that a porosity of final anode material is reduced, a proportion of macropores is reduced, and it is not easy for the electrolyte to permeate into the aggregate, facilitating to protect silicon-based material particles in the interior, and to reduce contact probability of the electrolyte and the silicon-based material. Thus, structure stability of the anode material is improved, and cycle performance of the battery is improved.

In an embodiment, the silicon-based material has a median particle size of 1 nm to 500 nm.

In an embodiment, the carbon material includes at least one of artificial graphite, natural graphite, soft carbon, hard carbon, amorphous carbon, activated carbon, mesocarbon microbead, carbon nanotube, carbon nanofiber, porous carbon, and graphene.

In an embodiment, a mass ratio of the silicon-based material and the carbon material is (10 to 70): (10 to 50).

In an embodiment, the silicon-based material has porous structure.

In an embodiment, the silicon-based material includes at least one of an elemental silicon, a silicon oxide material, and a silicon alloy.

In an embodiment, the step of obtaining a first precursor includes: grade-mixing a carbon material, a silicon-based material and a solvent, and removing the solvent, to obtain a first precursor.

In an embodiment, the solvent includes an organic solvent.

In an embodiment, the organic solvent includes at least one of methanol, ethanol, ethylene glycol, propanol, isopropanol, glycerin, n-butanol, isobutanol, and pentanol.

In an embodiment, the step of grade-mixing a carbon material, a silicon-based material and a solvent includes further adding a metal oxide.

In an embodiment, the metal oxide has a chemical formula of MₓO_{y}, where 0.2≤y/x≤3, and M includes at least one of Sn, Ge, Fe, Cu, Ti, Na, Mg, Al, Ca, and Zn.

In an embodiment, the metal oxide is in a form of sheet and/or strip shape.

In an embodiment, the metal oxide has an aspect ratio greater than 2.

In an embodiment, a mass ratio of the metal oxide and the silicon-based material is (1 to 20): 100.

In an embodiment, a way for the grade-mixing includes at least one of mechanical stirring, ultrasonic dispersion, and milling dispersion.

In an embodiment, the step of obtaining a first precursor includes: grade-mixing a carbon material, a silicon-based material and a solvent, and drying, to obtain a first precursor.

In an embodiment, the drying has a temperature of 40°C to 600°C, and a duration of 1 h to 15 h.

In an embodiment, a mass ratio of the first precursor and the first carbon source is (10 to 80): 100.

In an embodiment, the first carbon source includes at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt.

In an embodiment, a mass ratio of the first precursor and the defoaming agent is (10 to 80): (0.4 to 14).

In an embodiment, the defoaming agent includes at least one of cetyl benzenesulfonic acid, polyether modified silicone oil, monoamide, bis-amide, trialkyl melamine, cyanuric chloride melamine, fatty amine, lauric acid, palmitic acid, fatty acid glyceride, polydimethylsiloxane, polyacrylic acid, ethylene oxide, and propylene oxide.

In an embodiment, the densification includes at least one of a fusion process, a kneading and extruding process, a molding process, and an impregnation process.

In an embodiment, the fusion process is mechanical fusion.

In an embodiment, a fusion machine for the mechanical fusion has a rotation speed of 10r/min to 100r/min.

In an embodiment, the mechanical fusion has a duration of at least 0.5 h.

In an embodiment, the carbonizing has a temperature of 600 °C to 1200 °C, and a duration of 1 h to 10 h.

In an embodiment, the carbonizing has a heating rate of 1°C/min to 30°C/min.

In an embodiment, a protective gas is introduced during the carbonizing, where the protective gas includes at least one of nitrogen, helium, neon, argon, and krypton.

In an embodiment, before grade-mixing a carbon material, a silicon-based material, and a solvent, the method further includes performing oxidation activation on the carbon material.

In an embodiment, the oxidation activation is performed under a condition including: placing the carbon material in a mixed gas for the oxidation activation, where the mixed gas includes at least one of air, carbon dioxide, and water vapor.

In an embodiment, the oxidation activation has a temperature of 400°C to 1200°C.

In an embodiment, the oxidation activation has a duration of 1 h to 13 h.

In an embodiment, the method further includes carbon-coating the aggregate.

In an embodiment, the method further includes carbon-coating the aggregate, and a process of the carbon-coating includes: mixing the aggregate with a second carbon source and carbon-coating.

In an embodiment, the method further includes carbon-coating the aggregate, and a process of the carbon-coating includes: mixing the aggregate with a second carbon source for carbon-coating, where the second carbon source includes at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt.

In an embodiment, the method further includes carbon-coating the aggregate, and a process of the carbon-coating includes: mixing the aggregate with a second carbon source for carbon-coating, where a mass ratio of the aggregate and the second carbon source is (20 to 100): (10 to 80).

In an embodiment, the method further includes carbon-coating the aggregate, and a process of the carbon-coating includes: mixing the aggregate with the second carbon source for carbon-coating, where the carbon-coating has a temperature of 600°C to 1200°C, and a duration of 1 h to 10 h.

In a third aspect, an embodiment of the present disclosure provides a lithium ion battery including the anode material according to the first aspect, or the anode material prepared by the preparation method according to the second aspect.

The technical solution of the present disclosure has at least the following beneficial effects:

The anode material of the present disclosure includes an aggregate, and the aggregate includes an active material and a carbon material. The anode material has a porosity W of ≤ 2.5%, within the range, effectively inhibiting an electrolyte from directly permeating into particles of the anode material through pore structure thereof, and effectively avoiding a side reaction caused by contact between electrolyte and the silicon-based material. Furthermore, by controlling the quantity proportion of particles with a pore diameter of > 50 nm in the anode material, the side reaction caused by electrolyte and the silicon-based material is further avoided, and it is not easy for the electrolyte to permeate into the aggregate. The aggregate has a structure beneficially protecting the silicon-based material particles therein, effectively inhibiting volume expansion of the anode material, reducing expansion rate, preventing internal structure of the aggregate from collapsing as well, and improving cycle performance of the battery.

Secondly, in the preparation method of the anode material provided by the present disclosure, a carbon material, a silicon-based material and a solvent are grade-mixed and subjected to vacuum impregnation to obtain a first precursor, and the first precursor is mixed with a first carbon source and a defoaming agent and carbonized to obtain an aggregate. In the processes, the grade-mixing can enhance mixing uniformity of different substances with each other, reduce interspace generated by accumulation of different substances, improve bulk density, and minimize pores generated by accumulation. by utilizing effect of vacuum, the vacuum impregnation further removes gas on surface of adsorbed product, thus reducing the porosity. Adding the defoaming agent can reduce and eliminate bubbles formed by a volatile matter during the carbonizing, facilitating escape of the volatile matter. During the carbonizing, the first carbon source usually generates a large amount of volatile matter. If the volatile matter does not escape in time, it tends to left internally to form pores after curing. An uniformly dispersed defoaming agent can permeate into elastic film of foams and is distributed in the film, which make the elastic film of foams broken through reduction of surface tension, facilitating more smooth escape of the volatile matter, then reducing part of pores, and making the material more dense, so that a porosity of final anode material is reduced, a proportion of macropores is reduced, and it is not easy for the electrolyte to permeate into the aggregate, facilitating to protect silicon-based material particles in the interior, and to reduce contact probability of the electrolyte and the silicon-based material. Thus, structure stability of the anode material is improved, and cycle performance of the battery is improved.

The preparation method provided by the present disclosure is suitable for expanded production, the prepared anode material effectively improves cycle stability of charging and discharging of the lithium battery, and effectively reducing expansion rate of the anode material.

### BRIEF DESCRIPTION OF DRAWINGS

FIG. 1 is a schematic flowchart of the preparation method of the anode material provided by Examples of the present disclosure;
FIG. 2 is a scanning electron microscope (SEM) photograph of the anode material prepared by Example 1 of the present disclosure;
FIG. 3 is an XRD pattern of the anode material prepared by Example 1 of the present disclosure;
FIG. 4 is a graph of initial charging and discharging curve of the anode material prepared by Example 1 of the present disclosure; and
FIG. 5 is a graph of cycle performance curve of the anode material prepared by Example 1 of the present disclosure.

### DETAIL DESCRIPTION OF EMBODIMENTS

Preferred embodiments of the present disclosure are described as follows, it should be noted that modifications and adaptations may be made to those skilled in the art without departing from the principles of the present disclosure, which are also deemed to fall within the scope of the present disclosure.

According to an embodiment of the anode material, the anode material includes an aggregate, and the aggregate includes a carbon material and a silicon-based material, where the anode material has a porosity W of ≤ 2.5%, and particles with a pore diameter of > 50 nm in the anode material has a quantity proportion P of ≤ 1%.

The porosity of the anode material is obtained by the following test method:
a pore volume ΔV of the anode material is tested by using a micro-pores size distribution method; and a true density P of the anode material is tested, and the porosity W of the anode material is calculated to be W=ΔV/(ΔV+1/P).

The anode material of the embodiment includes an aggregate, and the aggregate includes an active material and a carbon material. The anode material has a porosity W of ≤ 2.5%, within the range, effectively inhibiting an electrolyte from directly permeating into particles of the anode material through pore structure thereof, and effectively avoiding a side reaction caused by contact between electrolyte and the silicon-based material. Furthermore, by controlling the quantity proportion of particles with a pore diameter of > 50 nm in the anode material, it is not easy for the electrolyte to permeate into the aggregate, and the side reaction caused by electrolyte and the silicon-based material is further avoided. The aggregate has a structure beneficially protecting the silicon-based material particles therein, effectively inhibiting volume expansion of the anode material, reducing expansion rate, preventing structure collapse, and improving cycle performance of the battery.

The anode material has a porosity W of ≤ 2.5%. At this time, the porosity of the anode material is relatively low, that is, the anode material has a high compactness, thus, on the one hand, energy density of this composite material is improved, and on the other hand, even if surface layer of the material with high-compactness is damaged, it is not easy for the electrolyte to permeate into the aggregate, facilitating to protect silicon-based material particles in the interior, and to reduce contact probability of the electrolyte and the silicon-based material, and thereby facilitating to form a stable solid electrolyte membrane. In addition, the aggregate with high-compactness has a high damage strength, which offsets stress effect caused by expansion, and improves structure stability of the anode material, thus effectively inhibiting volume expansion of the anode material, reducing expansion rate, and improving cycle performance of the battery.

In some embodiments, the anode material may specifically has a porosity of 2.5%, 2.4%, 2.3%, 2.2%, 2.1%, 2.0%, 1.9%, 1.6%, 1.5%, 1.2%, 0.5%, or 0.01%, etc., or other value within the above range, which is not limited herein. It is understood that the anode material has a low porosity, i.e, has a high solidity, facilitating formation of a stable solid electrolyte film, so as to reduce contact of electrolyte with the active material.

In some embodiments, particles of the anode material have a breaking strength of ≥ 400 MPa. In some embodiments, particles of the anode material may specifically have a breaking strength of 400 MPa, 410 MPa, 420 MPa, 450 MPa, 480 MPa, 490 MPa, 500 MPa, 550 MPa, 580 MPa, or 600 MPa, etc., or other value within the above range, which is not limited herein. Because it has strong rigidity, structure stability of the particle is strong, which can resist a certain volume expansion stress, thereby reducing expansion, and improving battery cycling stability.

In some embodiments, the silicon-based material includes at least one of an elemental silicon, a silicon oxide material, and a silicon alloy. The silicon alloy includes, such as, silicon lithium alloy, silicon magnesium alloy, etc. The silicon oxide material may have a chemical formula of SiOₓ, where 0<x<2. The silicon oxide material may be SiO, SiO_{0.2,} SiO_{0.5,} SiO_{0.7}, SiO_{0.9}, SiO_{1.5}, SiO_{1.6}, or SiO_{1.9}, etc.

In some embodiments, the silicon-based material is in a particle form. The silicon-based material has a median particle size of 1 nm to 500 nm, which may specifically be 1 nm, 5 nm, 10 nm, 15 nm, 20 nm, 30 nm, 40 nm, 50 nm, 100 nm, 200 nm, 300 nm, 400 nm, or 500 nm, etc., or other value within the above range, which is not limited herein. The silicon-based material in nanoscale has strong structure stability, which inhibits volume expansion. However, the silicon-based material in nanoscale has a large surface energy, which tends to agglomeration during charging and discharging, and the silicon-based material has too small particle size, resulting in high production cost. Therefore, preferably, the silicon-based material has a median particle size of 1 nm to 200 nm, more preferably 1 nm to 100 nm.

In some embodiments, the carbon material includes at least one of artificial graphite, natural graphite, soft carbon, hard carbon, amorphous carbon, activated carbon, mesocarbon microbead, carbon nanotube, carbon nanofiber, porous carbon, and graphene.

In some embodiments, a mass ratio of the silicon-based material and the carbon material is (10 to 70): (10 to 50), which may specifically be 10:10, 20:30, 20:50, 25:30, 30:45, 40:50, 60:50, 70:50, etc., or other value within the above range, which is not limited herein.

In some embodiments, the aggregate further includes a metal oxide. Compounding the metal oxide with the silicon-based material reduces expansion of the silicon-based material, and improves long-cycle performance and breaking strength.

In some embodiments, in the aggregate, the metal oxide is distributed in the silicon-based material, and a carbon material is filled between the silicon-based material and the metal oxide.

In some embodiments, the silicon-based material has pore structure filled with the carbon material and the metal oxide. It is understood that by filling pores of the silicon-based material with the carbon material and the metal oxide, the structure stability of the aggregate is improved, resisting a certain volume expansion stress, and reducing expansion.

In some embodiments, the carbon material has pore structure filled with the silicon-based material and the metal oxide.

In some embodiments, the metal oxide has a chemical formula of MₓO_{y}, where 0.2≤y/x≤3, M includes at least one of Sn, Ge, Fe, Cu, Ti, Na, Mg, Al, Ca, or Zn. Specifically, the metal oxide may be GeO₂, SnO₂, ZnO, TiO₂, Fe₃O₄, MgO, CuO, etc. The selected metal oxide has a lower volume expansion change rate than that of the silicon-based material during lithium intercalation, thus, compounding the metal oxide with the silicon-based material reduces expansion of the silicon-based material, and improves long-cycle performance.

In some embodiments, the metal oxide is in a form of sheet and/or strip shape.

In some embodiments, the metal oxide has an aspect ratio greater than 2. It should be noted that when the metal oxide is in the form of strip shape, the aspect ratio specifically refers to a ratio of length to particle size of the particle, where the particle size refers to maximum linear distance between two points at peripheral edge of cross section perpendicular to length direction of the conductive enhancer in strip shape; when the metal oxide is in the form of sheet shape, the aspect ratio specifically refers to a ratio of length to width of the metal oxide in sheet shape. Specifically, the metal oxide has an aspect ratio of 2, 2.5, 3, 3.5, 4, 4.5, 5, 6, 7, 8, 9, 12, 15, 17, 18, 22, etc., or other value within the above range, which is not limited herein. According to numerous experiments, when the aspect ratio of the metal oxide is greater than 2, physical binding force between the metal oxide and the silicon-based material is improved, thus more buffering volume expansion change of the silicon-based material, and improving cycle performance.

In some embodiments, a mass ratio of the metal oxide and the silicon-based material is (1 to 20): 100. Specifically, the mass ratio of the metal oxide and the active material may be 1:100, 1.5:100, 2:100, 3:100, 4.5:100, 5:100, 6:100, 7:100, 8:100, 9:100, etc., or other value within the above range, which is not limited herein. If the metal oxide has a too high content, initial efficiency of the material decreases, while if the metal oxide has a too low content, rigidity of it to aggregate structure decreases, and cycling stability of the particle decreases.

Further, the anode material further includes a carbon layer coated on at least part of surface of the aggregate. Preferably, the carbon layer is distributed on surface of the aggregate.

In some embodiments, the carbon layer includes amorphous carbon.

In some embodiments, the carbon layer has a thickness of 1 nm to 3000 nm. It is understood that, the carbon layer coated on surface of the aggregate can reduce contact of the active material with electrolyte, reducing generation of a passivation film, and increasing reversible capacity of the battery.

Specifically, the carbon layer has a thickness of 1 nm, 50 nm, 180 nm, 200 nm, 350 nm, 400 nm, 550 nm, 850 nm, 950 nm, 1050 nm, 1500 nm, 2000 nm, 2500 nm, or 3000 nm, etc., or other value within the above range, which is not limited herein. When the carbon layer is excessively thick, proportion of carbon is excessively high, which does not facilitate to obtain a high specific capacity composite; while when the carbon layer is excessively thin, it does not facilitate to increase conductivity of the anode material, and volume expansion inhibition performance of the material is weak, resulting in a poor long cycle performance. Preferably, the carbon layer has a thickness of 50 nm to 800 nm; more preferably, the carbon layer has a thickness of 100 nm to 500 nm.

It should be noted that, in some embodiments, the anode material in which the carbon layer is coated on surface of the aggregate has a porosity of ≤ 2.5%, and a breaking strength of ≥ 400 MPa. Keeping overall porosity and breaking strength of the anode material within these ranges further enhances performance of the anode material.

In some embodiments, the anode material has a median particle size of 0.5 µm to 30 µm, which may specifically 0.5 µm, 1 µm, 5 µm, 8 µm, 10 µm, 13 µm, 15 µm, 18 µm, 20 µm, 25 µm, or 30 µm, etc., or other value within the above range, which is not limited herein. It is understood that controlling the median particle size of the anode material within the above range facilitates to improve cycle performance of the anode material.

In some embodiments, the anode material has a specific surface area of ≤ 10 m²/g, which may specifically be 10 m²/g, 8 m²/g, 7 m²/g, 5 m²/g, 3 m²/g, 2 m²/g, 1 m²/g, or 0.5 m²/g, etc., or other value within the above range, which is not limited herein. It is understood that controlling the specific surface area of the anode material within the above range facilitates to inhibit volume expansion, and to improve cycle performance of the anode material.

In some embodiments, the anode material particles has a breaking strength of ≥ 400 MPa, which may specifically be 420 MPa, 440 MPa, 460 MPa, 500 MPa, 600 MPa, 700 MPa, 800 MPa, etc., or other value within the above range, which is not limited herein. It is understood that controlling the breaking strength of the anode material within the above range facilitates to inhibit structure of the anode material from being damaged, and to improve cycle performance of the anode material.

It should be noted that without contradicting each other, the anode materials of the above embodiments may be arbitrarily combined, for example, the breaking strength and the porosity of the anode material particles can be combined limited, etc.

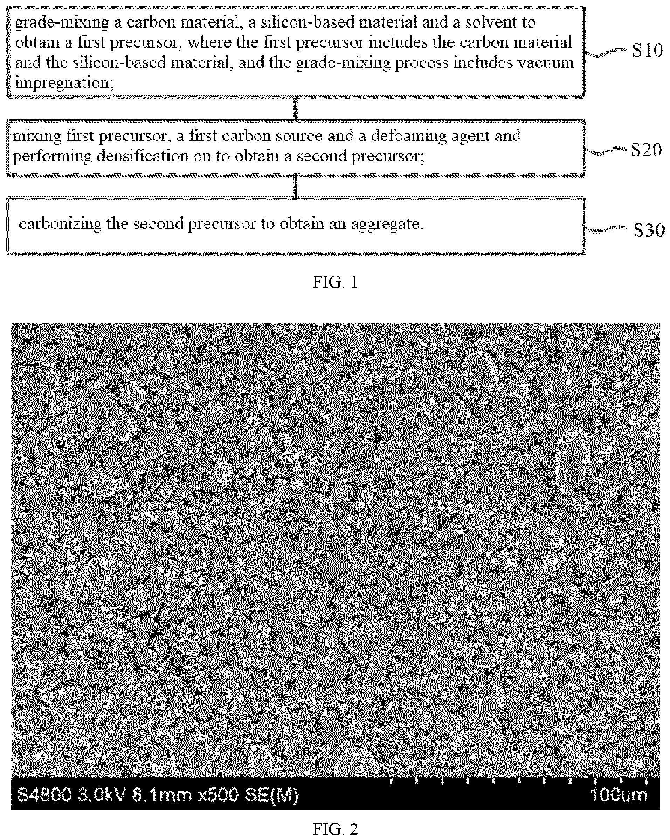

In another aspect, the present disclosure provides a preparation method of an anode material, as shown in FIG. 1, including the following steps:
step S10, grade-mixing a carbon material, a silicon-based material and a solvent to obtain a first precursor, where the first precursor includes the carbon material and the silicon-based material, and the grade-mixing process includes vacuum impregnation;
step S20, mixing first precursor, a first carbon source and a defoaming agent and performing densification on to obtain a second precursor;
step S30, carbonizing the second precursor to obtain an aggregate.

In the preparation method of the embodiment, a carbon material, a silicon-based material and a solvent are grade-mixed and subjected to vacuum impregnation to obtain a first precursor, and the first precursor is mixed with a first carbon source and a defoaming agent and carbonized to obtain an aggregate. In the processes, the grade-mixing can enhance mixing uniformity of different substances with each other, reduce interspace generated by accumulation of different substances, improve bulk density, and minimize pores generated by accumulation. by utilizing effect of vacuum, the vacuum impregnation further removes gas on surface of adsorbed product, thus reducing the porosity. Adding the defoaming agent can reduce and eliminate bubbles formed by a volatile matter during the carbonizing, facilitating escape of the volatile matter. During the carbonizing, the first carbon source usually generates a large amount of volatile matter. If the volatile matter does not escape in time, it tends to left internally to form pores after curing. By adding the defoaming agent, an uniformly dispersed defoaming agent can permeate into elastic film of foams and is distributed in the film, which make the elastic film of foams broken through reduction of surface tension, facilitating more smooth escape of the volatile matter. Then, through a densification, part of pores are further reduced, making the material more dense, so that a porosity of final anode material is reduced, and it is not easy for the electrolyte to permeate into the aggregate, facilitating to protect silicon-based material particles in the interior, and to reduce contact probability of the electrolyte and the silicon-based material. Thus, structure stability of the anode material is improved, effectively inhibiting volume expansion of the anode material, reducing expansion rate, and improving cycle performance of the battery.

The preparation method of the present disclosure is specifically described below with reference to the embodiments.
before step S10, the method further includes:
carbonizing and pore-forming a carbon source to obtain the carbon material having pore structure.

In some embodiments, the carbon source includes at least one of coconut shell, apricot shell, rice hull, peanut shell, hazelnut shell, and other plant shells.

In some embodiments, the carbonizing has a temperature of 600°C to 1200°C, for example, 600°C, 700°C, 800°C, 900°C, 1000°C, 1100°C, 1200°C, etc. Preferably, the carbonizing has a temperature of 600°C to 1000°C.

In some embodiments, the carbonizing has a duration of 1 h to 10 h, for example, 1 h, 2 h, 3 h, 4 h, 5 h, 6 h, 7 h, 8 h, 9 h, or 10 h, etc.

In some embodiments, the carbonizing has a heating rate of 1°C/min to 30°C/min, which may specifically be 1°C/min, 5°C/min, 10°C/min, 15°C/min, 20°C/min, 25°C/min, or 30°C/min, etc. For example, preferably, the carbonizing has a heating rate of 1°C/min to 15°C/min.

In some embodiments, a protective gas is introduced during the carbonizing, which includes at least one of nitrogen, helium, neon, argon, and krypton.

In some embodiments, the method further includes oxidized activating the carbon material.

Specifically, a way for oxidized activating includes: placing the carbon material in a mixed gas for oxidized activating, where the mixed gas includes at least one of air, carbon dioxide, and water vapor.

In some embodiments, the oxidized activation has a temperature of 400°C to 1200°C, which may specifically be 400°C, 500°C, 680°C, 700°C, 820°C, 850°C, 880°C, 900°C, 1000°C, 1100°C, or 1200°C, etc. The oxidized activation has a duration of 1 h to 13 h, which may specifically be 1 h, 3 h, 5 h, 7 h, 9 h, 10 h, 12 h, or 13 h, etc.

In some embodiments, before step S10, the method further includes:
placing a carbon source in a mixed acid solution for pore-forming, to obtain the carbon material having pore structure.

In some embodiments, the mixed acid solution includes concentrated sulfuric acid and nitric acid in a mass ratio of 1: (1 to 45). Specifically, the mass ratio of concentrated sulfuric acid and nitric acid may specifically be 1:1, 1:2, 1:5, 1:10, 1:20, 1:25, 1:30, 1:35, 1:40, or 1:45, etc., or other value within the above range, which is not limited herein.

In some embodiments, before step S10, the method further includes:
pore forming the silicon-based material to obtain a silicon-based material having pore structure.

Specifically, uniformly mixing silicon powder, silver nitrate, a corrosion aid, and deionized water, sequentially adding hydrofluoric acid and hydrogen peroxide for a corrosion reaction, and filtering, washing and drying, to obtain a silicon-based material having pore structure.

A mass ratio of silicon powder, silver nitrate, corrosion aid and deionized water is (10 to 40): (1 to 5): (50 to 200): (50 to 500). The corrosion aid is selected from at least one of propanol, ethanol, acetic acid, hydrochloric acid, tert-butanol, and polyethylene glycol. The corrosion reaction has a duration of 1 h to 5 h, which may specifically be 1 h, 1.5 h, 2 h, 2.5 h, 3 h, 3.5 h, 4 h, and 5 h, etc. The hydrofluoric acid has a mass concentration of 10% to 30%, and the hydrogen peroxide has a concentration of 5% to 45%.

Step S10, grade-mixing a carbon material, a silicon-based material and a solvent to obtain a first precursor, where the first precursor includes the carbon material and the silicon-based material, and the grade-mixing process includes vacuum impregnation.

In some embodiments, grade-mixing a carbon material, a silicon-based material and a solvent and drying, to obtain a first precursor.

Specifically, a specific process of grade-mixing a carbon material, a silicon-based material and a solvent is: mixing the silicon-based material and the solvent to form a first pre-mixture, and mixing the carbon material and the first pre-mixture; alternatively, mixing the carbon material and the solvent to form a second pre-mixture, and mixing the first pre-mixture and the second pre-mixture, so as to achieve grade-mixing. It is understood that those skilled in the art may select an appropriate grade-mixing process on the basis of the grade-mixing concept according to specific components of the active material, the first carbon source and the solvent, so as to fully mix the active materials. The grade-mixing promotes tighter contact among different active materials, reducing pores generated by particles accumulation and improving packing density, thereby obtaining a material with low porosity.

In some embodiments, mixing the silicon-based material and the solvent to form a first pre-mixture, and impregnating the carbon material into the first pre-mixture for fully mixing. In some embodiments, placing the first pre-mixture into a vacuum impregnation tank for impregnation, where the vacuum impregnation tank is controlled to have a vacuum pressure of ≤ 50 Pa and a impregnation duration of 0.5 h to 12 h. The pre-mixture is subjected to a vacuum impregnation for further reducing adsorbed gas, bubbles and the like therein by vacuum effect, so as to obtain a material with low-porosity in subsequent process.

In some embodiments, the silicon-based material includes one of or a combination of at least two of an elemental silicon, a silicon alloy, and a silicon oxide.

Specifically, the silicon alloy is silicon lithium alloy, silicon magnesium alloy, etc. The silicon oxide material has a chemical formula of SiOₓ, where 0<x<2. The silicon oxide material is SiO, SiO_{0.2}, SiO_{0.5}, SiO_{0.7}, SiO_{0.9}, SiO_{1.5}, SiO_{1.6}, or SiO_{1.9}, etc.

In some embodiments, the silicon-based material is in a particle form. The silicon-based material has a median particle size of 1 nm to 500 nm, which may specifically be 1 nm, 5 nm, 10 nm, 15 nm, 20 nm, 30 nm, 40 nm, 50 nm, 100 nm, 200 nm, 300 nm, 400 nm, or 500 nm, etc., or other value within the above range, which is not limited herein. According to numerous experiments, the silicon-based material in nanoscale has a large surface energy, which tends to agglomeration during charging and discharging. The particle is strong in structure, which can inhibit volume expansion of silicon. However, since the silicon-based material in nanoscale has a large surface energy, which tends to agglomeration during charging and discharging, and the silicon-based material has too small particle size, resulting in high production cost. Preferably, the silicon-based material has a median particle size of 1 nm to 200 nm, more preferably 1 nm to 100 nm.

In some embodiments, the carbon material has pore structure. The carbon material includes at least one of artificial graphite, natural graphite, soft carbon, hard carbon, amorphous carbon, activated carbon, mesocarbon microbead, carbon nanotube, carbon nanofiber, porous carbon, and graphene.

In some embodiments, a mass ratio of the silicon-based material and the carbon material is (10 to 70): (10 to 50), which may specifically be 10:10, 20:30, 20:50, 25:30, 30:45, 40:50, 60:50, 70:50, etc., or other value within the above range, which is not limited herein.

In some embodiments, the solvent includes an organic solvent; and the organic solvent includes at least one of methanol, ethanol, ethylene glycol, propanol, isopropanol, glycerin, n-butanol, isobutanol, and pentanol.

In some embodiments, the step of grade-mixing a carbon material, a silicon-based material and a solvent includes further adding a metal oxide.

In some embodiments, the metal oxide has a chemical formula of MₓO_{y}, where 0.2≤y/x≤3, and M includes at least one of Sn, Ge, Si, Fe, Cu, Ti, Na, Mg, Al, Ca, and Zn.

In some embodiments, the metal oxide is in a form of sheet and/or strip shape.

In some embodiments, the metal oxide has an aspect ratio greater than 2.

In some embodiments, a mass ratio of the metal oxide and the silicon-based material is (1 to 20): 100. Specifically, the mass ratio of the metal oxide and the active material may be 1:100, 1.5:100, 2:100, 3:100, 4.5:100, 5:100, 6:100, 7:100, 8:100, 10:100, 15:100, 20:100 etc., or other value within the above range, which is not limited herein. If the metal oxide has a too high content, initial efficiency of the material decreases, while if the metal oxide has a too low content, rigidity of it to aggregate structure decreases, and cycling stability of the particle decreases.

In some embodiments, preparing the first precursor further includes dispersing a mixture obtained by grade-mixing.

In some embodiments, a way for the dispersing includes at least one of mechanical stirring, ultrasonic dispersion, and milling dispersion. Preferably, milling dispersion is adopted, so as to effectively disperse the silicon-based material, preventing the silicon-based material from being agglomerated together, and promoting the silicon-based material to be dispersed into smaller nanoparticles. Preferably, wet ball milling is adopted, with a dispersion time controlled to 0.5 h to 10 h. By fully milling, components are mixed more uniformly, so that a particle size of the silicon-based material achieves 1 nm to 500 nm.

In some embodiments, grade-mixing a carbon material, a silicon-based material and a solvent, and removing the solvent, to obtain a first precursor, where a way for removing the solvent includes drying.

In some embodiments, the drying has a temperature of 40°C to 600°C, which may specifically be 40°C, 50°C, 80°C, 100°C, 120°C, 250°C, 380°C, 400°C, 500°C, 580°C, or 600°C, etc., and a duration of 1 h to 15 h, which may specifically be 1 h, 3 h, 5 h, 7 h, 9 h, 10 h, 12 h, or 15 h, etc. A way for the drying is, for example, in-furnace drying, freeze drying, blending steam, spray drying, etc., The drying in the embodiment removes the solvent in precursor solution as much as possible.

The dried first precursor may also be dispersed, and the dispersion may be milling dispersion, with a duration of 0.5 h to 9 h, which may specifically be 0.5 h, 1.5 h, 2.5 h, 3.5 h, 4.5 h, 5.5 h, 7.5 h, or 9 h, etc. The milling dispersion in the embodiment controls particle size after dispersion.

Step S20, mixing the first precursor, a first carbon source and a defoaming agent, and performing densification, to obtain a second precursor.

It is understood that adding the defoaming agent during the carbonizing reduces and even eliminates bubbles formed by volatile components, which more facilitates escape of the volatile components and reduction of porosity of the anode material.

In some embodiments, the first carbon source includes at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt.

In some embodiments, the defoaming agent includes at least one of cetyl benzenesulfonic acid, polyether modified silicone oil, monoamide, bis-amide, trialkyl melamine, cyanuric chloride melamine, fatty amine, lauric acid, palmitic acid, fatty acid glyceride, polydimethylsiloxane, polyacrylic acid, ethylene oxide, and propylene oxide.

In some embodiments, a mass ratio of the first precursor and the first carbon source is (10 to 80): 100, which specifically may be 10:100, 15:100, 20:100, 25:100, 30:100, 35: 100, 50:100, 60:100, or 80:100, etc. The mass ratio of the first precursor and the first carbon source should not be too high, otherwise it may cause reduction of capacity of the material. In addition, in some embodiments, too high proportion of non-graphitized carbon ratio causes reduction of initial efficiency of the material.

In some embodiments, a mass ratio of the first precursor and the defoaming agent is (10 to 80): (0.4 to 14), which specifically may be 10:0.4, 15:1, 20:1.5, 25:2, 30:5, 35:7, 50:8, 60:10, or 80:14, etc.

In some embodiments, the densification includes at least one of a fusion process, a kneading and extruding process, a molding process, and an impregnation process.

In some embodiments, the fusion process is mechanical fusion. Performing fusion process on the first precursor increases breaking strength of particles of the anode material, and further undergoing a primary heat treatment improves structure stability of particle as well as connection stability between the active material and the first carbon source, reducing porosity. Definitely, in other embodiments, other processes may also be employed for the densification, such as molding, impregnation, etc., providing the aggregate has a porosity of ≤ 2.5% and a breaking strength ≥ 400 MPa.

In some embodiments, the final anode material has a porosity of ≤ 2.5%, and particles of the anode material have a breaking strength of ≥ 400 MPa, at this time, porosity and compression strength of the aggregate is controlled depending on condition of final carbon layer, so that the porosity and the compression strength of the anode material finally reach the target values.

In some embodiments, during fusion, the fusion machine has a rotation speed of 30 r/min to 100 r/min, which specifically may be 30 r/min, 40 r/min, 50 r/min, 60 r/min, 70 r/min, 80 r/min, or 100 r/min, etc., and a fusion duration of at least 0.5 h, which specifically may be 0.5 h, 0.8 h, 0.9 h, 1.0 h, 1.5 h, or 2 h, etc., which are not limited herein.

step S30, carbonizing the second precursor to obtain an aggregate.

In some embodiments, the carbonizing has a temperature of 600°C to 1200°C, for example, 600°C, 700°C, 800°C, 900°C, 1000°C, 1100°C, 1200°C, etc. Preferably, the carbonizing has a temperature of 600°C to 1000°C.

In some embodiments, the carbonizing has a duration of 1 h to 10 h, for example, 1 h, 2 h, 3 h, 4 h, 5 h, 6 h, 7 h, 8 h, 9 h, or 10 h, etc.

In some embodiments, the carbonizing has a heating rate of 1°C/min to 30°C/min, which may specifically be 1°C/min, 5°C/min, 10°C/min, 15°C/min, 20°C/min, 25°C/min, or 30°C/min, etc. For example, preferably, the carbonizing has a heating rate of 1°C/min to 15°C/min.

In some embodiments, a protective gas is introduced during the carbonizing, where the protective gas includes at least one of nitrogen, helium, neon, argon, and krypton.

The method further includes step S40: carbon-coating the aggregate.

In some embodiments, in step S40: mixing the aggregate with a second carbon source and carbon-coating.

In some embodiments, the second carbon source includes at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt.

In some embodiments, a way for the mixing includes magnetic stirring, mechanical stirring, ultrasonic dispersion, milling dispersion, etc.

In some embodiments, a mass ratio of the aggregate and the second carbon source is (20 to 100): (10 to 80). The mass ratio of the aggregate and the second carbon source may be 20:10, 30:15, 50:60, 80:30, 90:20, 100: 10, etc., or other value within the above range, which is not limited herein.

In some embodiments, a way for the carbon-coating is, for example, vacuum sintering, hot pressing sintering, or atmospheric sintering. The carbon-coating has a temperature of 600°C to 1200°C, for example, 600°C, 700°C, 800°C, 900°C, 1000°C, 1100°C, 1200°C, etc. Preferably, the carbon-coating has a temperature of 600°C to 1000°C.

In some embodiments, the carbon-coating has a duration of 1 h to 10 h, for example, 1 h, 2 h, 3 h, 4 h, 5 h, 6 h, 7 h, 8 h, 9 h, or 10 h, etc.

In some embodiments, the carbon-coating is performed in a protective atmosphere, where gas of the protective atmosphere includes at least one of nitrogen, helium, neon, argon, and krypton.

It should be noted that the carbon-coating of step S40 is unnecessary, and the aggregate obtained by carbonizing in step S30 is directly used as the anode material, which is not limited herein.

In some embodiments, after the carbon-coating, performing at least one of crushing, sieving, and demagnetizing. Preferably, after the carbon-coating, performing crushing, sieving, and demagnetizing in sequence.

In some embodiments, a way for the crushing is employing any one of a mechanical crusher, a gas flow crusher, and a low temperature crusher.

In some embodiments, a way for the sieving is employing any one of a fixed sieve, a drum sieve, a resonance sieve, a roller sieve, a vibrating sieve, and a chain sieve. A mesh count by the sieving is ≥ 500 meshes, and specifically 500 meshes, 600 meshes, 700 meshes and 800 meshes, etc. Controlling particle size of the anode material within the above range facilitates to improve cycle performance of the anode material.

In some embodiments, a device for the demagnetizing is any one of a permanent magnet drum magnetic separator, an electromagnetic iron remover, and a pulsating high gradient magnetic separator. The demagnetizing is to control final magnetic substance content of the anode material, for avoiding adverse impact of the magnetic substance on discharge effect of lithium ion battery and safety of the battery during use.

The median particle size in the present disclosure refers to an average particle size, the physical meaning of which is a particle size when cumulative particle size distribution percentage of the particles reaches 50%, tested by a Malvern particle size analyzer. The Malvern particle size analyzer uses scattering phenomenon of the particles to light, to comprehensively calculate the particle size distribution of the particles under test according to distribution of scattered light energy.

The present application further provides a lithium ion battery including the anode material as described above.

The embodiments of the present application are further illustrated by the following several examples. The embodiments herein are not limited to the specific examples described below. Variations may be made appropriately without changing the scope of the independent claims.

### Example 1

The preparation method of the anode material of this example included the following steps:
(1) coconut shell was carbonized at 600°C for 6 h under air isolation, and oxidized activated at 900°C with air, carbon dioxide, water vapor or a mixed gas thereof, to obtain a porous carbon material;
(2) nano-silicon with a particle size of 200 nm was mixed with butanol solvent to form a nano-silicon slurry, the dispersed nano-silicon slurry was added into a vacuum impregnation tank, then added porous carbon. The vacuum pressure was set to 150 Pa, and the impregnation was conducted for 5 h, and then drying was conducted, to obtain a first precursor;
(3) the obtained first precursor was mixed with phenolic resin in a mass ratio of 100:35, added 3% lauric acid and uniformly mixed, and placed in a kneader with a rotation speed of 40 r/min for kneading for 30 min, to obtain a second precursor;
(4) the mixed materials were placed into a high-temperature box furnace, fed with nitrogen, carbonized at 800°C for 3 h, crushed, and sieved through a 500 mesh sieve, to obtain an aggregate;
(5) the aggregate was mixed with sucrose in a mass ratio of 20: 10, and carbon-coated at 750°C for 8 h in a nitrogen atmosphere, to obtain the anode material.

The anode material prepared in this example includes an aggregate and a carbon layer coated on surface of the aggregate, the aggregate includes nano-silicon powder and porous carbon, and at least part of the nano-silicon powder fills in pore structure of the porous carbon. The anode material has a median particle size of 14 µm and a specific surface area of 2.2 m²/g, and the carbon layer has an average thickness of 460 nm.

The anode material has a porosity W of 1.3%, and the particles with a pore diameter of > 50 nm in the anode material has a quantity proportion P of 0.15%. The particles of the anode material have a breaking strength of 860 Mpa.

### Example 2

The preparation method of the anode material of this example included the following steps:
(1) nano-silicon with a particle size of 200 nm was mixed with propanol solvent to form a nano-silicon slurry, the dispersed nano-silicon slurry was added into a vacuum impregnation tank, then added artificial graphite. The vacuum pressure was set to 10 Pa, and the impregnation was conducted for 9 h, and then drying was conducted, to obtain a first precursor;
(2) the first precursor was mixed with fructose in a mass ratio of 100:55, added 5% polyether modified silicone oil, and placed in a fusion machine with a rotation speed of 40 r/min for fusion process for 60 min, to obtain a second precursor;
(3) the mixed materials were placed into a high-temperature box furnace, fed with nitrogen, carbonized at 950°C for heat preservation for 6 h, crushed, and sieved through a 500 mesh sieve, to obtain an aggregate;
(4) the aggregate was mixed with glucose in a mass ratio of 30:10, and carbon-coated at 800°C for 8 h in a nitrogen atmosphere, to obtain the anode material.

The anode material prepared in this example includes an aggregate and a carbon layer coated on surface of the aggregate, and the aggregate includes nano-silicon powder and artificial graphite. The anode material has a median particle size of 16 µm and a specific surface area of 2.5 m²/g, and the carbon layer has an average thickness of 420 nm.

The anode material has a porosity W of 1.1%, and the particles with a pore diameter of > 50 nm in the anode material has a quantity proportion P of 0.2%. The particles of the anode material have a breaking strength of 770 Mpa.

### Example 3

The preparation method of the anode material of this example included the following steps:
(1) graphite was placed in a mixed acid solution of concentrated sulfuric acid and nitric acid (mass ratio of 1:1) for hollowing process, to obtain porous graphite;
(2) nano-silicon with a particle size of 80 nm was mixed with ethanol solvent to form a nano-silicon slurry, the dispersed nano-silicon slurry was added into a vacuum impregnation tank, then added the porous graphite. The vacuum pressure was set to 15 Pa, and the impregnation was conducted for 9 h, and then drying was conducted, to obtain a first precursor;
(3) the first precursor was mixed with sucrose in a mass ratio of 100:55, added 2% palmitic acid, and placed in a kneader with a rotation speed of 80 r/min for kneading for 90 min, to obtain a second precursor;
(4) the mixed materials were placed into a high-temperature box furnace, fed with nitrogen, carbonized at 850°C for heat preservation for 6 h, crushed, and sieved through a 500 mesh sieve, to obtain an aggregate;
(5) the aggregate was mixed with acrylic resin in a mass ratio of 40: 10, and carbon-coated at 650°C for 6 h in a nitrogen atmosphere, to obtain the anode material.

The anode material prepared in this example includes an aggregate and a carbon layer coated on surface of the aggregate, and the aggregate includes nano-silicon powder and porous graphite. The anode material has a median particle size of 11 µm and a specific surface area of 3.2 m²/g, and the carbon layer has an average thickness of 330 nm.

The anode material has a porosity W of 2.2%, and the particles with a pore diameter of > 50 nm in the anode material has a quantity proportion P of 0.55%. The particles of the anode material have a breaking strength of 512 Mpa.

### Example 4

The preparation method of the anode material of this example included the following steps:
(1) nano-silicon with a particle size of 50 nm was mixed with pentanol solvent to form a nano-silicon slurry, the dispersed nano-silicon slurry was added into a vacuum impregnation tank, then added natural graphite. The vacuum pressure was set to 37 Pa, and the impregnation was conducted for 8 h, and then drying was conducted, to obtain a first precursor;
(2) the first precursor was mixed with resin in a mass ratio of 100:45, added 5% polydimethylsiloxane and uniformly mixed, to obtain a second precursor;
(3) the mixed materials were placed into a high-temperature box furnace, fed with nitrogen, carbonized at 1050°C for heat preservation for 2 h, crushed, and sieved through a 500 mesh sieve, to obtain an aggregate;
(4) the aggregate was mixed with asphalt in a mass ratio of 50:12, and carbon-coated at 650°C for 6 h in a nitrogen atmosphere, to obtain the anode material.

The anode material prepared in this example includes an aggregate and a carbon layer coated on surface of the aggregate, and the aggregate includes nano-silicon powder and natural graphite. The anode material has a median particle size of 12.2 µm and a specific surface area of 2.9 m²/g, and the carbon layer has an average thickness of 680 nm.

The anode material has a porosity W of 1.8%, and the particles with a pore diameter of > 50 nm in the anode material has a quantity proportion P of 0.3%. The particles of the anode material have a breaking strength of 640 Mpa.

### Example 5

The preparation method of the anode material of this example included the following steps:
(1) carbon black material was tested by BET method for selecting a porous carbon material with a specific surface area of ≤ 50 m²/g and a porosity of ≥ 30%.
(2) nano-silicon with a particle size of 100 nm was mixed with cyclohexane solvent to form a nano-silicon slurry, the dispersed nano-silicon slurry was added into a vacuum impregnation tank, then added the porous carbon. The vacuum pressure was set to 500 Pa, and the impregnation was conducted for 5 h, and then drying was conducted, to obtain a first precursor;
(3) the first precursor was mixed with sucrose in a mass ratio of 95:35, added 5% ethylene oxide, and placed in a fusion machine with a blade width of 1.1 cm for fusion process for 150 min, to obtain a second precursor;
(4) the mixed materials were placed into a high-temperature box furnace, fed with nitrogen, carbonized at 1050°C for heat preservation for 2 h, crushed, and sieved through a 500 mesh sieve, to obtain an aggregate;
(5) the aggregate was mixed with asphalt in a mass ratio of 50:12, and carbon-coated at 650°C for 6 h in a nitrogen atmosphere, to obtain the anode material.

The anode material prepared in this example includes an aggregate and a carbon layer coated on surface of the aggregate, and the aggregate includes nano-silicon powder and porous carbon. The anode material has a median particle size of 8.2 µm and a specific surface area of 2.7 m²/g, and the carbon layer has an average thickness of 580 nm.

The anode material has a porosity W of 0.8%, and the particles with a pore diameter of > 50 nm in the anode material has a quantity proportion P of 0.05%. The particles of the anode material have a breaking strength of 923 Mpa.

### Example 6

Example 6 was conducted substantially in the same way as in Example 1, except that: nano-silicon with a particle size of 600 nm was mixed with toluene solvent to form a nano-silicon slurry.

The anode material prepared in this example includes an aggregate and a carbon layer coated on surface of the aggregate, and the aggregate includes nano-silicon powder and porous carbon. The anode material has a median particle size of 12 µm and a specific surface area of 1.9 m²/g, and the carbon layer has an average thickness of 423 nm.

The anode material has a porosity W of 2.3%, and the particles with a pore diameter of > 50 nm in the anode material has a quantity proportion P of 0.9%. The particles of the anode material have a breaking strength of 411 Mpa.

### Example 7

Example 7 was conducted substantially in the same way as in Example 1, except that: silicon monoxide with a particle size of 50 nm was mixed with butanol solvent to form a silicon monoxide slurry.

The anode material prepared in this example includes an aggregate and a carbon layer coated on surface of the aggregate, the aggregate includes silicon monoxide and porous carbon, and at least part of the silicon monoxide fills in pore structure of the porous carbon. The anode material has a median particle size of 13 µm and a specific surface area of 1.85 m²/g, and the carbon layer has an average thickness of 410 nm.

The anode material has a porosity W of 1.6%, and the particles with a pore diameter of > 50 nm in the anode material has a quantity proportion P of 0.12%. The particles of the anode material have a breaking strength of 455 Mpa.

### Example 8

Example 8 was conducted substantially in the same way as in Example 1, except that: silicon lithium alloy with a particle size of 50 nm was mixed with cyclohexane solvent to form a silicon lithium alloy slurry.

The anode material prepared in this example includes an aggregate and a carbon layer coated on surface of the aggregate, the aggregate includes silicon lithium alloy and porous carbon, and at least part of the silicon lithium alloy fills in pore structure of the porous carbon. The anode material has a median particle size of 15 µm and a specific surface area of 1.94 m²/g, and the carbon layer has an average thickness of 240 nm.

The anode material has a porosity W of 1.9%, and the particles with a pore diameter of > 50 nm in the anode material has a quantity proportion P of 0.5%. The particles of the anode material have a breaking strength of 680 Mpa.

### Example 9

Example 9 was conducted substantially in the same way as in Example 1, except that: in step (4), it was carbonized at 500°C for 3 h, crushed, and sieved through a 500 mesh sieve, to obtain an anode material.

The anode material prepared in this example includes an aggregate and a carbon layer coated on surface of the aggregate, the aggregate includes nano-silicon powder and porous carbon, and at least part of the nano-silicon powder fills in pore structure of the porous carbon. The anode material has a median particle size of 13 µm and a specific surface area of 2.9 m²/g, and the carbon layer has an average thickness of 450 nm.

The anode material has a porosity W of 1.4%, and the particles with a pore diameter of > 50 nm in the anode material has a quantity proportion P of 0.16%. The particles of the anode material have a breaking strength of 580 Mpa.

### Example 10

Example 10 was conducted substantially in the same way as in Example 1, except that: in step (2), nano-silicon with a particle size of 200 nm was mixed with ZnO and n-butanol solvent to form a nano-silicon slurry, the dispersed nano-silicon slurry was added into a vacuum impregnation tank, then added porous carbon. The vacuum pressure was set to 150 Pa, and the impregnation was conducted for 5 h, and then drying was conducted, to obtain a first precursor.

The anode material prepared in this example includes an aggregate and a carbon layer coated on surface of the aggregate, the aggregate includes nano-silicon powder and porous carbon, and at least part of the nano-silicon powder fills in pore structure of the porous carbon. The anode material has a median particle size of 142 µm and a specific surface area of 2.0 m²/g, and the carbon layer has an average thickness of 490 nm.

The anode material has a porosity W of 1.6%, and the particles with a pore diameter of > 50 nm in the anode material has a quantity proportion P of 0.19%. The particles of the anode material have a breaking strength of 590 Mpa.

### Example 11

Example 11 was conducted substantially in the same way as in Example 1, except that: the carbon-coating of step (5) was removed.

The anode material prepared in this example includes an aggregate, the aggregate includes nano-silicon powder and porous carbon, and at least part of the nano-silicon powder fills in pore structure of the porous carbon. The anode material has a median particle size of 10 µm and a specific surface area of 2.8 m²/g.

The anode material has a porosity W of 1.8%, and the particles with a pore diameter of > 50 nm in the anode material has a quantity proportion P of 0.23%. The particles of the anode material have a breaking strength of 580 Mpa.

### Comparative Example 1

An anode material was prepared substantially in the same way as in Example 1, except that: in step (3), no fusion process was performed.

The anode material prepared in this comparative example includes an aggregate and a carbon layer coated on surface of the aggregate, and the aggregate includes nano-silicon powder and porous carbon. The anode material has a median particle size of 18 µm and a specific surface area of 2.5 m²/g, and the carbon layer has an average thickness of 465 nm.

The anode material has a porosity W of 10.2%, and the particles with a pore diameter of > 50 nm in the anode material has a quantity proportion P of 1.7%. The particles of the anode material have a breaking strength of 105 Mpa.

### Comparative Example 2

An anode material was prepared substantially in the same way as in Example 1, except that: in step (3), no defoaming agent was added.

### Comparative Example 3

Anode material was prepared substantially in the same way as in Example 1, except that: in step (2), no grade-mixing was performed, specifically: nano-silicon with a particle size of 200 nm, butanol solvent, and porous carbon were added together into a vacuum impregnation tank. The vacuum pressure was set to 150 Pa, and the impregnation was conducted for 5 h, and then drying was conducted, to obtain a first precursor.

### Comparative Example 4

An anode material was prepared substantially in the same way as in Example 1, except that: in step (2), no vacuum impregnation was performed, specifically: the dispersed nano-silicon slurry was added into an impregnation tank, then added porous carbon. The impregnation was conducted for 5 h, and then drying was conducted, to obtain a first precursor.

### Test Methods

### (1) Test of porosity of anode materials:

A micro-pores size distribution method was adopted to test pore volume ΔV of the anode material. True density P of the anode material was tested. Porosity W of the anode material was calculated to be W=ΔV/(ΔV+1/P).

### (2) Test of quantity proportion P of the particles with a pore size of > 50 nm in the anode material:

A cross section of the anode material was tested, in which 100 particles were randomly counted, and quantity Ni of the particles having pore structure with a pore size of > 50 nm therein was calculated, and the quantity proportion P=N₁/100≤1%.

### (3) Test of breaking strength of particles of the anode material:

The anode material was pressed to test a breaking strength for a single particle, which was performed repeatedly for ≥ 50 anode material particles, and an average value was taken as the breaking strength of the particles.

### (4) Test method for median particle size of the anode material:

The median particle size, i.e., average particle size, of the anode material was tested by a Malvern laser particle size analyzer.

### (5) Test method for specific surface area of the anode material:

The specific surface area of the anode material was tested by using a Micromeritics Tristar 3020 specific surface area and pore size analyzer. A certain mass of powder was weighed, and complete degassed under vacuum heating. After removing surface adsorbate, specific surface area of the particles was calculated by amount of adsorbed nitrogen using nitrogen adsorption method.

### (6) Test Method for thickness of carbon layer of the anode material:

The material was cut by a focused ion beam microscopy (FIB-SEM) , and the obtained carbon layer was measured for an average thickness in a scanning electron microscope image.

### (7) Electrochemical test:

The electrochemical cycle performances were tested by the following processes: the prepared silicon carbon composite anode material, a conductive agent, and a binders were dissolved in a solvent in a mass percent of 94:1:5 for mixing, with a solid content controlled to be 50%, then applied to a copper foil current collector, and vacuum dried, to prepare an anode plate; and then lithium ion button batteries were assembled by conventional production process by further using a ternary cathode plate prepared by a conventional production process, 1 mol/L of electrolyte including LiPF₆/(ethylene carbonate + dimethyl carbonate + methyl ethyl carbonate (v/v=1:1:1)), Celgard 2400 separator, and shell. An initial thickness H0 of the plates of the lithium ion batteries was measured by using a micrometer. The test for charging and discharging of the lithium ion batteries was performed by a LAND cell test system produced by Wuhan Jinnuo Electronics Co., Ltd, under room temperature, for charging and discharging at 0.2C constant current, and the charging and discharging voltage was controlled to 2.75 V to 4.2 V, thus obtaining an initial reversible capacity, an initial charging capacity, and an initial discharging capacity. The initial Coulombic efficiency = the initial discharging capacity / the initial charging capacity.

The cycling was repeated for 50 times, a thickness H1 of the plates of the lithium ion batteries was measured by using a micrometer, thus an expansion rate after 50 cycles = (H1-H0)/H0 × 100%.

The cycling was repeated for 100 times, and an discharging capacity was recorded as remaining capacity of the lithium ion batteries, thus an capacity retention = the remaining capacity / the initial capacity × 100%.

The results of the above performance tests are as follows:

**Table 1. Performance Comparison Results**

| samples | porosity (%) | quantity proportion P (%) | initial reversible capacity (mAh/g) | initial Coulombic efficiency (%) | capacity retention after 100 cycles (%) | expansion rate after 50 cycles of plates (%) |
|---|---|---|---|---|---|---|
| Example 1 | 1.3 | 0.15 | 1504 | 88.6 | 93.8 | 37.9 |
| Example 2 | 1.1 | 0.2 | 1517 | 89.1 | 92.8 | 39.3 |
| Example 3 | 2.2 | 0.55 | 1480 | 88.8 | 93.8 | 39.7 |
| Example 4 | 1.8 | 0.3 | 1491 | 89.2 | 93.9 | 37.9 |
| Example 5 | 0.8 | 0.05 | 1543 | 89.4 | 94.1 | 35.9 |
| Example 6 | 2.3 | 0.9 | 1514 | 88.1 | 89.5 | 39.9 |
| Example 7 | 1.6 | 0.12 | 1207 | 79.4 | 94.6 | 31.4 |
| Example 8 | 1.9 | 0.5 | 1344 | 94.5 | 93.3 | 32.3 |
| Example 9 | 1.4 | 0.16 | 1544 | 88.8 | 93.2 | 38.6 |
| Example 10 | 1.6 | 0.19 | 1498 | 88.5 | 92.9 | 39.1 |
| Example 11 | 1.8 | 0.23 | 1525 | 88.5 | 92.1 | 37.5 |
| Comparative Example 1 | 10.2 | 3 | 1499 | 87.0 | 83.1 | 45.5 |
| Comparative Example 2 | 6.8 | 1.7 | 1514 | 87.3 | 85.8 | 44.9 |
| Comparative Example 3 | 4.2 | 1.3 | 1504 | 88.6 | 84.5 | 45.2 |
| Comparative example 4 | 6.2 | 1.5 | 1510 | 87.5 | 85.2 | 46.6 |

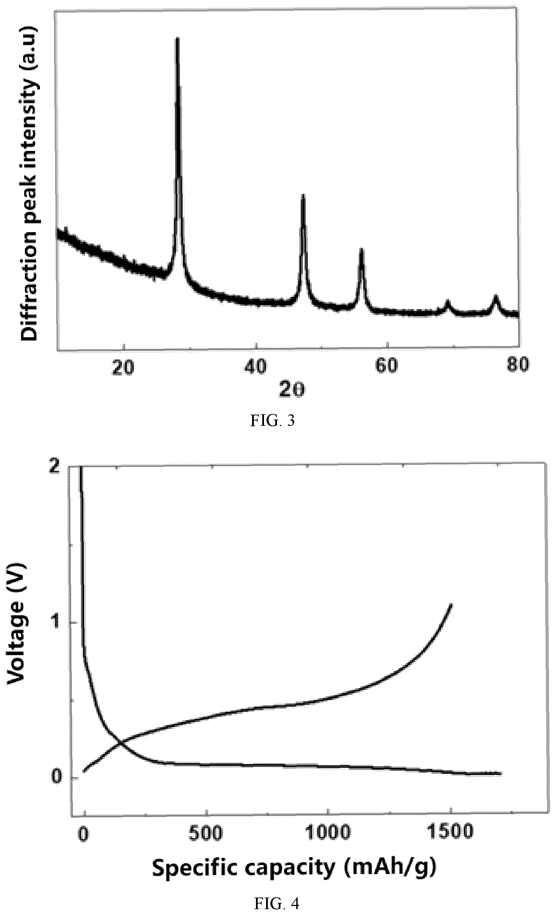

FIG. 4 is a graph of initial charging and discharging curve of the anode material prepared by Example 1 of the present disclosure. As shown in FIG. 4, the anode material prepared by Example 1 has a higher initial charging and discharging capacity and a higher initial Coulombic efficiency.

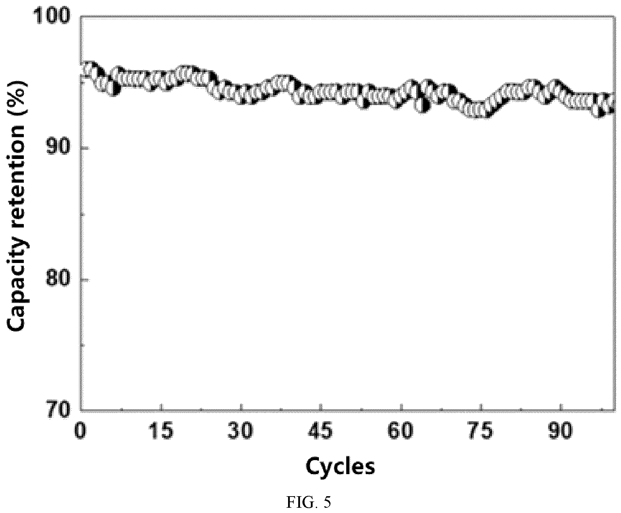

FIG. 5 is a graph of cycle performance curve of the anode material prepared by Example 1 of the present disclosure. As shown in FIG. 5, the anode material has excellent cycle performance, with a capacity retention after 50 cycles of 93.5%. This because the aggregate has a relatively small porosity, and it is not easy for the electrolyte to permeate into the aggregate. The aggregate has a structure beneficially protecting the active material particles therein, effectively inhibiting volume expansion of the anode material, reducing expansion rate, and improving cycle performance of the battery.

As shown in Table 1, the anode materials prepared by Examples 1 to 11 include the aggregate and the carbon layer on surface of the aggregate, and the aggregate includes an active material and a carbon material. The anode material has a porosity W of ≤ 2.5%, within the range, effectively inhibiting an electrolyte from directly permeating into particles of the anode material through pore structure thereof, and effectively avoiding a side reaction caused by contact between electrolyte and the silicon-based material. Furthermore, by controlling the quantity proportion of particles with a pore diameter of > 50 nm in the anode material to be lower than 1%, the side reaction caused by electrolyte and the silicon-based material is further avoided, and it is not easy for the electrolyte to permeate into the aggregate. The aggregate has a structure beneficially protecting the silicon-based material particles therein, effectively inhibiting volume expansion of the anode material, reducing expansion rate, and improving cycle performance of the battery.

Among them, in the preparation process of the anode material of Example 6, the nano-silicon with a larger particle size was adopted. The particles are easily pulverized and crushed during cycling, resulting in unstable structure and deteriorated cycling of the material.

In the preparation process of the anode material of Example 7, the silicon material with a smaller particle size was adopted. An agglomeration is easily occurred during the charging and discharging process, which is adverse to cycling stability of the material.

In the preparation process of the anode material of Example 8, a silicon lithium alloy was used as a silicon material. Thus, structure strength of the silicon material is improved, cycling capacity retention is maintained at a higher level, and expansion rate of the battery is reduced.

In the preparation process of the anode material of Example 9, the temperature of the carbon-coating was lower. The carbon coating of the carbon source on surface of the aggregate is incomplete, resulting in reduced conductivity of the anode material, and reduced initial Coulombic efficiency of the anode material.

In the preparation process of the anode material of Example 10, a metal oxide was further added during mixing the silicon-based material, the carbon material and the solvent. Thus, rigidity of the aggregate structure is improved, cycling stability of the particles is improved, and expansion rate after cycling of the plate is reduced.

In the preparation process of the anode material of Comparative Example 1, the raw materials was not added with a defoaming agent in step (3). It is adverse to more smooth removal of volatile components in the first carbon source, increasing the porosity of the anode material. Thus, it is easy for the electrolyte to permeate into the aggregate, and the contact probability of the electrolyte and the silicon-based material is increased, increasing volume expansion rate of the anode material, and deteriorating cycle performance of the battery.

In the preparation process of the anode material of Comparative Example 2, the precursor was not fused in step (3). Thus, the overall structure tends to be loose, connection stability of the silicon-based material and the carbon material is poor, pores between the silicon-based material and the carbon material are increased, resulting in reduced structure strength of the aggregate, and greatly reduced breaking strength, which is difficult to resist stress change caused by expansion effect of the active material. The expansion rate is improved.

In the preparation processes of the anode materials of Comparative Examples 3 and 4, no grade-mixing or vacuum impregnation was performed in step (1). Thus, the porosity of the anode material is increased, and the expansion rate of the plates is increased.

Although the present disclosure is disclosed above in terms of preferred embodiments, but not tended to limit the claims. Any of those skilled in the art may make several possible changes and modifications without departing from the concept of the present disclosure, so the protection scope of the present disclosure should be defined by the claims of the present disclosure.

## Claims

1. An anode material, **characterized in that** the anode material comprises an aggregate, and the aggregate comprises a carbon material and a silicon-based material, wherein the anode material has a porosity W of ≤ 2.5%, and particles with a pore diameter of > 50 nm in the anode material has a quantity proportion P of ≤ 1%; and
wherein the porosity of the anode material is obtained by the following test method:
a pore volume ΔV of the anode material is tested by using a micro-pores size distribution method; and a true density P of the anode material is tested, and the porosity W of the anode material is calculated to be W=ΔV/(ΔV+1/P).

2. The anode material according to claim 1, **characterized in that** the anode material comprises at least one of the following features (1) to (10):
(1) the aggregate comprises a carbon material having pore structure, and a silicon-based material filled within the pore structure of the carbon material;
(2) the aggregate comprises a silicon-based material having pore structure, and a carbon material filled within the pore structure of the silicon-based material;
(3) the silicon-based material has a median particle size of 1 nm to 500 nm;
(4) the silicon-based material accounts a mass ratio of 10% to 70% in the anode material;
(5) the carbon material accounts a mass ratio of 10% to 50% in the anode material;
(6) the carbon material comprises at least one of artificial graphite, natural graphite, soft carbon, hard carbon, amorphous carbon, activated carbon, mesocarbon microbead, carbon nanotube, carbon nanofiber, porous carbon, and graphene;
(7) the carbon material has a median particle size of 1 µm to 50 µm;
(8) the silicon-based material comprises at least one of an elemental silicon, a silicon oxide material, and a silicon alloy;
(9) the silicon-based material has pore structure; and
(10) particles of the anode material have a breaking strength of ≥ 400 MPa.

3. The anode material according to any one of claims 1 and 2, **characterized in that** the anode material comprises at least one of the following features (1) to (12):
(1) the aggregate further comprises a metal oxide;
(2) the metal oxide is distributed between the carbon material and the silicon-based material;
(3) the metal oxide is distributed within the pore structure of the carbon material;
(4) the metal oxide is distributed within the pore structure of the silicon-based material;
(5) the metal oxide has a chemical formula of MₓO_{y}, wherein 0.2≤y/x≤3, and M comprises at least one of Sn, Ge, Fe, Cu, Ti, Na, Mg, Al, Ca, and Zn;
(6) the metal oxide is in a form of sheet and/or strip shape;
(7) the metal oxide has an aspect ratio greater than 2;
(8) the anode material further comprises a carbon layer present on at least a part of surface of the aggregate;
(9) the carbon layer comprises amorphous carbon;
(10) the carbon layer has a thickness of 1 nm to 3000 nm;
(11) the anode material has a median particle size of 0.5 µm to 30 µm; and
(12) the anode material has a specific surface area of ≤10 m²/g.

4. A preparation method of an anode material, **characterized in that** the preparation method comprises the following steps:
grade-mixing a carbon material, a silicon-based material and a solvent to obtain a first precursor, wherein the first precursor comprises the carbon material and the silicon-based material, and the grade-mixing process comprises vacuum impregnation;
mixing the first precursor, a first carbon source and a defoaming agent, and performing densification, to obtain a second precursor; and
carbonizing the second precursor to obtain an aggregate.

5. The preparation method according to claim 4, **characterized in that** the preparation method comprises at least one of the following features (1) to (5):
(1) the silicon-based material has a median particle size of 1 nm to 500 nm;
(2) the carbon material comprises at least one of artificial graphite, natural graphite, soft carbon, hard carbon, amorphous carbon, activated carbon, mesocarbon microbead, carbon nanotube, carbon nanofiber, porous carbon, and graphene;
(3) a mass ratio of the silicon-based material and the carbon material is (10 to 70): (10 to 50);
(4) the silicon-based material has porous structure; and
(5) the silicon-based material comprises at least one of an elemental silicon, a silicon oxide material, and a silicon alloy.

6. The preparation method according to claim 4 or 5, **characterized in that** the preparation method comprises at least one of the following features (1) to (11):
(1) the step of obtaining a first precursor comprises: grade-mixing a carbon material, a silicon-based material and a solvent, and removing the solvent, to obtain a first precursor;
(2) the solvent comprises an organic solvent;
(3) the organic solvent comprises at least one of methanol, ethanol, ethylene glycol, propanol, isopropanol, glycerin, n-butanol, isobutanol, and pentanol;
(4) the step of grade-mixing a carbon material, a silicon-based material and a solvent comprises further adding a metal oxide;
(5) the metal oxide has a chemical formula of MₓO_{y}, wherein 0.2≤y/x≤3, and M comprises at least one of Sn, Ge, Fe, Cu, Ti, Na, Mg, Al, Ca, and Zn;
(6) the metal oxide is in a form of sheet and/or strip shape;
(7) the metal oxide has an aspect ratio greater than 2;
(8) a mass ratio of the metal oxide and the silicon-based material is (1 to 20): 100;
(9) a way for the grade-mixing comprises at least one of mechanical stirring, ultrasonic dispersion, and milling dispersion ;
(10) the step of obtaining a first precursor comprises: grade-mixing a carbon material, a silicon-based material and a solvent, and drying, to obtain a first precursor; and
(11) the drying has a temperature of 40°C to 600°C, and a duration of 1 h to 15 h.

7. The preparation method according to any one of claims 4 to 6, **characterized in that** the preparation method comprises at least one of the following features (1) to (8):
(1) a mass ratio of the first precursor and the first carbon source is (10 to 80): 100;
(2) the first carbon source comprises at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt;
(3) a mass ratio of the first precursor and the defoaming agent is (10 to 80): (0.4 to 14);
(4) the defoaming agent comprises at least one of cetyl benzenesulfonic acid, polyether modified silicone oil, monoamide, bis-amide, trialkyl melamine, cyanuric chloride melamine, fatty amine, lauric acid, palmitic acid, fatty acid glyceride, polydimethylsiloxane, polyacrylic acid, ethylene oxide, and propylene oxide;
(5) the densification comprises at least one of a fusion process, a kneading and extruding process, a molding process, and an impregnation process;
(6) the fusion process is mechanical fusion;
(7) a fusion machine for the mechanical fusion has a rotation speed of 10r/min to 100r/min;
(8) the mechanical fusion has a duration of at least 0.5 h;
(9) the carbonizing has a temperature of 600 °C to 1200 °C, and a duration of 1 h to 10 h;
(10) the carbonizing has a heating rate of 1°C/min to 30°C/min; and
(11) a protective gas is introduced during the carbonizing, wherein the protective gas comprises at least one of nitrogen, helium, neon, argon, and krypton .

8. The preparation method according to any one of claims 4 to 7, **characterized in that** the preparation method comprises at least one of the following features (1) to (4):
(1) before obtaining the first precursor, the preparation method further comprises performing oxidation activation on the carbon material;
(2) the oxidation activation is performed under a condition comprising: placing the carbon material in a mixed gas for the oxidation activation, wherein the mixed gas comprises at least one of air, carbon dioxide, and water vapor;
(3) the oxidation activation has a temperature of 400°C to 1200°C; and
(4) the oxidation activation has a duration of 1 h to 13 h.

9. The preparation method according to any one of claims 4 to 8, **characterized in that** the preparation method comprises at least one of the following features (1) to (7):
(1) the preparation method further comprises carbon-coating the aggregate;
(2) the preparation method further comprises carbon-coating the aggregate, and a process of the carbon-coating comprises: mixing the aggregate with a second carbon source and carbon-coating;
(3) the preparation method further comprises carbon-coating the aggregate, and a process of the carbon-coating comprises: mixing the aggregate with a second carbon source for carbon-coating, wherein the second carbon source comprises at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt;
(4) the preparation method further comprises carbon-coating the aggregate, and a process of the carbon-coating comprises: mixing the aggregate with a second carbon source for carbon-coating, wherein a mass ratio of the aggregate and the second carbon source is (20 to 100): (10 to 80); and
(5) the preparation method further comprises carbon-coating the aggregate, and a process of the carbon-coating comprises: mixing the aggregate with the second carbon source for carbon-coating, wherein the carbon-coating has a temperature of 600°C to 1200°C, and a duration of 1 h to 10 h.

10. A lithium ion battery, **characterized in that** the lithium ion battery comprises the anode material according to any one of claims 1 to 3, or an anode material prepared by the preparation method according to any one of claims 4 to 9.
